# EUROPEAN PATENT APPLICATION

(11) **EP 4 696 670 A1**
(43) Date of publication of application: **18.02.2026**
(21) Application number: 25195086.1
(22) Date of filing: 11.08.2025
(51) Int. Cl.: C04B 33/04, C04B 33/13, C04B 33/24, C04B 33/34, C04B 35/626, C04B 41/00, C04B 41/50

(54) **CERAMIC DOUGH FOR TILES INCLUDING GLASS OBTAINED FROM THE ENAMELING PROCESS OF PHOTOVOLTAIC PANELS AND TILE OBTAINED WITH SAID DOUGH**

(30) Priority: 13.08.2024 IT 202400018967
(71) Applicant: Gruppo Concorde S.p.A., 41040 Fiorano (MO) (IT)
(72) Inventor: ROLI, Stefano, 41054 Marano sul Panaro (MO) (IT); PRAMPOLINI, Giulio, 41014 Solignano Nuovo di Castelvetro (MO) (IT); BELLINA, Nicolas, 41053 Maranello (MO) (IT); BAGNI, Simone, 41014 Castelvetro (MO) (IT)
(74) Representative: Mannucci, Michele

(57) **Abstract**

A ceramic mixture for tiles comprises glass obtained from the disposal process of photovoltaic panels in a percentage ranging from 2% to 30% by weight on the dry total.

## Description

### Field of the invention

The present invention concerns a ceramic mixture comprising glass obtained from the disposal process of photovoltaic panels and a ceramic tile produced using glass obtained from the disposal process of photovoltaic panels.

The present invention further concerns the use of glass obtained from the disposal process of photovoltaic panels to produce a ceramic mixture and a method for producing a ceramic tile produced using glass obtained from the disposal process of photovoltaic panels.

### Background art

It has been estimated that, maintaining the current consumption, fossil fuels could run out in the next 50 years. Moreover, it is known that the combustion of fossil fuels causes high pollution.

For these reasons, for many years man has been attempting to devise solutions capable of exploiting renewable energy sources: solar radiation, wind, biomasses, etc.

In particular, photovoltaic panels allow solar energy to be exploited to produce clean and renewable electricity and, for this reason, groups of countries, such as the European Union, are strongly encouraging their use, so much so that a possible future strategy could be that of making photovoltaic panels mandatory for all public and commercial buildings over a specific size.

It is evident that the increased use of photovoltaic panels will have a positive impact on an environmental level and, at the same time, there will be an increase in the number of end-of-life photovoltaic panels.

The object of the present invention is not to describe the recycling process of photovoltaic panels in detail; however, in general this consists of grinding the photovoltaic panels and subsequent separation of the electronic components, containing glass, from the aluminum of the frames and from any electrical cables.

In particular, the glass is recovered by heat and/or chemical treatment of the electronic components.

Moreover, the recovered glass is subjected to mechanical and magnetic sieving to remove any (metal or non-metal) filaments.

However, glass obtained from the disposal process of photovoltaic panels often has residues of dark color (portions of photovoltaic cells) which make it difficult to reuse.

From an environmental point of view, the Applicant thus wondered about the possibility of using the glass obtained from the disposal process of photovoltaic panels in a ceramic mixture used to produce ceramic tiles.

In fact, the ceramic industry is currently characterized by a substantial environmental impact, due not only to the high energy consumption required to fire the ceramic, but also to the transport and extraction of the raw materials.

In general, the process for producing ceramic tiles starts from the selection of raw materials which, in the case of ceramic tiles made of porcelain stoneware, comprise clays, feldspars and sands to ensure that the ceramic tile has good mechanical properties and a water absorption value below 0.5%.

Subsequently, the raw materials, suitably weighed, are ground and mixed with water.

The liquid obtained by this process is called "slurry" in technical jargon.

The slurry is then atomized so as to obtain a powder with particle size distribution suitable for pressing.

The step of pressing, in particular, compacts the powder and, at the same time, defines the format of the ceramic tile.

The ceramic substrate thus obtained is also called "green".

Subsequently, the ceramic substrate is conveyed inside a dryer to reduce the moisture present inside it.

Drying usually takes place through the use of hot air, insufflated continuously into the dryer at temperatures of around 200°C.

It is essential for the dried ceramic substrate, i.e., the compacted and dried ceramic mixture, to have a percentage of water suitable for the subsequent controlled firing process and a sufficiently high breaking module, in order to withstand any mechanical stress it is subjected to along the glazing line.

In fact, once dried, the ceramic substrate can be transferred into a glazing line in which at least an exposed surface of the aforesaid substrate is decorated.

In detail, the exposed surface of the substrate can first be covered with a layer of engobe so as to regulate its color tone and prepare it for a subsequent step of decoration in which the pattern is actually produced.

In particular, it can be applied in various ways known to those skilled in the art, but application using a digital printer with jets of ceramic inks is the most advantageous in terms of customization of the pattern.

By way of non-limiting example, a ceramic ink for a digital printer comprises a non-organic pigment in the form of micrometric particles dispersed in a liquid, which usually comprises a solvent (nonpolar or polar) together with additives.

Subsequently, a layer of protective glaze can be applied on top of the pattern and the ceramic substrate, which following this step is also called "raw tile", is subjected to the controlled firing process.

In particular, firing takes place inside special roller kilns at maximum temperatures around 1230°C, in the case of ceramic tiles made of porcelain stoneware, and the duration of the firing process varies based on the format and on the thickness of the raw tile entering the kiln.

In the case of patterned ceramic tiles, it is important that the fired ceramic substrate, i.e., the fired ceramic mixture, does not have coloring that is too strong, or this would affect the yield of the pattern and it would be necessary to deposit a particular thick layer of engobe, increasing production costs.

Moreover, it is important for the fired ceramic substrate to have a water absorption of less than 0.5%, in the case of ceramic tiles made of porcelain stoneware. This characteristic, in particular, is known to be correlated to the maximum firing temperature.

Additionally, glazed ceramic tiles are notoriously easy to clean and not easily soiled.

After firing, the ceramic tile can be subjected to a rectification step, in which it is squared and calibrated, before being packaged and made available for sale on the market.

Moreover, in the case in which the production of a structured tile is desired, i.e., a ceramic tile with a three-dimensional structure on the exposed surface, the person skilled in the art can opt for different solutions known to those skilled in the art, combinable with one another.

In particular, one solution consists of obtaining a structured ceramic substrate, i.e., provided with a three-dimensional structure on the exposed surface, following the pressing step, by positioning a mold, which has the negative of the three-dimensional structure to be obtained on the exposed surface of the ceramic substrate, inside the press.

However, with the aforesaid solution it is necessary to replace the mold each time the three-dimensional structure requires to be changed, with evident time losses.

For this reason, the aforesaid solution is used less and less and today the structuring of ceramic tiles typically takes place through: i) applying a jet of liquid called "carving" liquid or "carving ink" using a digital printer; ii) ) applying a jet of liquid called "sinking" liquid or "sinking ink" using a digital printer; iii) ) applying a jet of liquid glue using a digital printer, on top of which grit is deposited.

In fact, with the aforesaid solutions it is possible to obtain a three-dimensional structure in a more efficient and customizable manner, as there is no longer the need for a physical mold, but only a digital model that is saved in a digital printer and can be managed by it.

In detail, the term "carving ink" generally indicates a compound that "opens" or "tears" the glaze applied on top of it.

In fact, carving ink is a compound that interacts with the glaze, for example with the carrier contained in the glaze, repelling it and, consequently, defining hollows in the surface of the glaze on top of it.

In particular, in this case, a polar carving ink (i.e., containing a polar substance) is used if the carrier of the glaze is of nonpolar type and, vice versa, a nonpolar carving ink (i.e., containing a nonpolar substance) is used when the carrier of the glaze is of polar type.

Conversely, "sinking ink" generally identifies a compound that "sinks" into the glaze underneath or causes the glaze on top of it to "sink".

In particular, sinking ink is a compound which, interacting with the glaze under or on top of it, modifies its crystalline structure during the firing step, forming hollows in the surface of the glaze.

It should be noted that both the use of a carving ink and the use of a sinking ink cause hollows to form in the glaze; instead, the solution iii) allows raised areas to be created on the surface of the glaze as, during firing, the grit is sintered and welded to the ceramic substrate.

### Objects of the invention

An object of the present invention is to reduce the environmental impact of the ceramic industry.

A further object of the present invention is to provide a ceramic mixture comprising glass obtained from the disposal process of photovoltaic panels.

Another object of the present invention is to provide a ceramic tile produced using a ceramic mixture comprising glass obtained from the disposal process of photovoltaic panels that is extremely strong and durable.

A further object of the present invention is to provide a ceramic tile produced using a ceramic mixture comprising glass obtained from the disposal process of photovoltaic panels that is easy to clean and not easily soiled.

Another object of the present invention is to provide a use of glass obtained from the disposal process of photovoltaic panels to produce a ceramic mixture.

Another object of the present invention is to provide a method for producing a ceramic tile using a ceramic mixture comprising glass obtained from the disposal process of photovoltaic panels.

### Brief description of the invention

These and other objects which will be apparent to those skilled in the art are achieved by a ceramic mixture, a use of glass obtained from the disposal process of photovoltaic panels, a ceramic tile and a method for producing a ceramic tile according to the appended claims.

### Brief description of the drawings

The invention can be better understood and implemented with reference to the accompanying drawings, which illustrate non-limiting examples of embodiments thereof, wherein:
Fig. 1 schematically shows a ceramic tile according to the invention;
Fig. 2 shows a sample of glass obtained from the disposal process of photovoltaic panels;
Fig. 3 is a detail of Fig. 2;
Fig. 4 schematically shows a method for producing a ceramic tile according to the invention.

### Detailed description of the invention

Generally, a ceramic mixture for a tile made of porcelain stoneware of the state of the art comprises clays in a percentage ranging from 25% to 55%, sands in a percentage ranging from 10% to 40% and feldspars in a percentage ranging from 10% to 55% by weight on the dry total.

In particular, the term sands indicates a compound comprising: SiO₂ from 99% to 75% by weight on the total, Al₂O₃ from 15% to 1% by weight on the total, Fe₂O₃ from 2% to 0% by weight on the total, TiO₂ from 2% to 0% by weight on the total, CaO from 5% to 0% by weight on the total, MgO from 5% to 0% by weight on the total, Na₂O from 4% to 0% by weight on the total, K₂O from 6% to 0% by weight on the total.

In particular, the term feldspars indicates a compound comprising: SiO₂ from 85% to 65% by weight on the total, Al₂O₃ from 20% to 8% by weight on the total, Fe₂O₃ from 2% to 0.02% by weight on the total, TiO₂ from 2% to 0.02% by weight on the total, CaO from 5% to 0% by weight on the total, MgO from 4% to 0% by weight on the total, Na₂O from 11% to 1% by weight on the total, K₂O from 12% to 0% by weight on the total.

In particular, the term clays indicates a compound comprising: SiO₂ from 75% to 40% by weight on the total, Al₂O₃ from 40% to 15% by weight on the total, Fe₂O₃ from 4% to 0.2% by weight on the total, TiO₂ from 4% to 0.2% by weight on the total, CaO from 10% to 0% by weight on the total, MgO from 5% to 0% by weight on the total, Na₂O from 2% to 0% by weight on the total, K₂O from 4% to 0% by weight on the total.

A ceramic mixture can further comprise a toughening compound in a percentage ranging from 0% to 2% by weight on the dry total in addition to the clays, sands and feldspars.

In particular, a toughening compound is a compound capable of performing a binding action in relation to the mixture, and in particular to the clays, so as to increase their mechanical strength.

The ceramic mixture for tiles according to the invention comprises glass obtained from the disposal process of photovoltaic panels.

Optionally, the glass has a particle size in a percentage of 100% less than or equal to 1 cm.

Generically, the glass obtained from the disposal process of photovoltaic panels comprises SiO₂ in a percentage ranging from 75% to 65%, Na₂O in a percentage ranging from 20% to 10% and CaO in a percentage ranging from 15% to 5%.

In particular, the ceramic mixture according to the invention comprises glass obtained from the disposal process of photovoltaic panels in a percentage ranging from 2% to 30% by weight on the dry total.

Even more in particular, the ceramic mixture according to the invention comprises clays in a percentage ranging from 25% to 70% by weight on the dry total, sands in a percentage ranging from 10% to 55% by weight on the dry total, feldspars in a percentage ranging from 3% to 53% by weight on the dry total and glass obtained from the disposal process of photovoltaic panels in a percentage ranging from 2% to 30% by weight on the dry total.

Optionally, the ceramic mixture according to the invention comprises glass obtained from the disposal process of photovoltaic panels in a percentage less than or equal to 25% by weight on the dry total.

Optionally, the ceramic mixture according to the invention comprises a toughening compound in a percentage ranging from 0% to 2% by weight on the dry total in addition to the clays, sands, feldspars and glass obtained from the disposal process of photovoltaic panels.

Optionally, the ceramic mixture according to the invention comprises clays in a percentage ranging from 45% to 60% by weight on the dry total, sands in a percentage ranging from 30% to 45% by weight on the dry total, feldspars in a percentage ranging from 3% to 10% by weight on the dry total and glass obtained from the disposal process of photovoltaic panels in a percentage ranging from 2% to 15% by weight on the dry total.

Optionally, the ceramic mixture according to the invention comprises glass obtained from the disposal process of photovoltaic panels in a percentage ranging from 2% to 10% by weight on the dry total.

According to a first embodiment of the invention, the ceramic mixture comprises clays in a percentage ranging from 25% to 55% by weight on the dry total, sands in a percentage ranging from 10% to 40% by weight on the dry total, feldspars in a percentage ranging from 3% to 53% by weight on the dry total and glass obtained from the disposal process of photovoltaic panels in a percentage ranging from 2% to 30% by weight on the dry total.

In other words, the mixture according to the first embodiment of the invention essentially differs from a mixture of the state of the art in that it comprises a percentage of glass obtained from the disposal process of photovoltaic panels in replacement of a part of the percentage of feldspars.

Optionally, the ceramic mixture according to the first embodiment comprises glass obtained from the disposal process of photovoltaic panels in a percentage less than or equal to 25% by weight on the dry total.

Optionally, the ceramic mixture according to the first embodiment comprises a toughening compound in a percentage ranging from 0% to 2% by weight on the dry total in addition to the clays, sands, feldspars and glass obtained from the disposal process of photovoltaic panels.

Optionally, the ceramic mixture according to the first embodiment comprises clays in a percentage ranging from 45% to 55% by weight on the dry total, sands in a percentage ranging from 30% to 40% by weight on the dry total, feldspars in a percentage ranging from 3% to 10% by weight on the dry total and glass obtained from the disposal process of photovoltaic panels in a percentage ranging from 2% to 15% by weight on the dry total.

Optionally, the ceramic mixture according to the first embodiment comprises glass obtained from the disposal process of photovoltaic panels in a percentage ranging from 2% to 10% by weight on the dry total.

Optionally, the ceramic mixture according to the first embodiment comprises glass obtained from the disposal process of photovoltaic panels in a percentage ranging from 2% to 5% by weight on the dry total.

According to a second embodiment of the invention, the ceramic mixture comprises clays in a percentage ranging from 25% to 70% by weight on the dry total, sands in a percentage ranging from 10% to 40% by weight on the dry total, feldspars in a percentage ranging from 3% to 38% by weight on the dry total and glass obtained from the disposal process of photovoltaic panels in a percentage ranging from 2% to 30% by weight on the dry total.

In other words, the mixture according to the second embodiment of the invention essentially differs from a mixture of the state of the art in that it comprises a percentage of glass obtained from the disposal process of photovoltaic panels and an additional percentage of clays in replacement of a part of the percentage of feldspars.

Optionally, the ceramic mixture according to the second embodiment comprises glass obtained from the disposal process of photovoltaic panels in a percentage less than or equal to 25% by weight on the dry total.

Optionally, the ceramic mixture according to the second embodiment comprises a toughening compound in a percentage ranging from 0% to 2% by weight on the dry total in addition to the clays, sands, feldspars and glass obtained from the disposal process of photovoltaic panels.

Optionally, the ceramic mixture according to the second embodiment comprises clays in a percentage ranging from 50% to 60% by weight on the dry total, sands in a percentage ranging from 30% to 40% by weight on the dry total, feldspars in a percentage ranging from 3% to 10% by weight on the dry total and glass obtained from the disposal process of photovoltaic panels in a percentage ranging from 2% to 15% by weight on the dry total.

Optionally, the ceramic mixture according to the second embodiment comprises glass obtained from the disposal process of photovoltaic panels in a percentage ranging from 2% to 10% by weight on the dry total.

Optionally, the ceramic mixture according to the second embodiment comprises glass obtained from the disposal process of photovoltaic panels in a percentage ranging from 2% to 5% by weight on the dry total.

According to a third embodiment of the invention, the ceramic mixture comprises clays in a percentage ranging from 25% to 55% by weight on the dry total, sand in a percentage ranging from 10% to 55% by weight on the dry total, feldspars in a percentage ranging from 3% to 38% by weight on the dry total and glass obtained from the disposal process of photovoltaic panels in a percentage ranging from 2% to 30% by weight on the dry total.

In other words, the mixture according to the third embodiment of the invention essentially differs from a mixture of the state of the art in that it comprises a percentage of glass obtained from the disposal process of photovoltaic panels and an additional percentage of sands in replacement of a part of the percentage of feldspars.

Optionally, the ceramic mixture according to the third embodiment comprises glass obtained from the disposal process of photovoltaic panels in percentage less than or equal to 25% by weight on the dry total.

Optionally, the ceramic mixture according to the third embodiment comprises a toughening compound in a percentage ranging from 0% to 2% by weight on the dry total in addition to the clays, sands, feldspars and glass obtained from the disposal process of photovoltaic panels.

Optionally, the ceramic mixture according to the third embodiment comprises clays in a percentage ranging from 45% to 55% by weight on the dry total, sands in a percentage ranging from 35% to 45% by weight on the dry total, feldspars in a percentage ranging from 3% to 10% by weight on the dry total and glass obtained from the disposal process of photovoltaic panels in a percentage ranging from 2% to 15% by weight on the dry total.

Optionally, the ceramic mixture according to the third embodiment comprises glass obtained from the disposal process of photovoltaic panels in a percentage ranging from 2% to 10% by weight on the dry total.

Optionally, the ceramic mixture according to the third embodiment comprises glass obtained from the disposal process of photovoltaic panels in a percentage ranging from 2% to 5% by weight on the dry total.

Clearly, the second embodiment and the third embodiment can be combined with each other so as to replace a part of the percentage of feldspars with a percentage of glass obtained from the disposal process of photovoltaic panels, an additional percentage of sands and an additional percentage of clays.

The protection provided by the present invention also extends to the use of glass obtained from the disposal process of photovoltaic panels to produce a ceramic mixture according to the invention.

The protection provided by the present invention further extends to a ceramic tile 10 produced using the ceramic mixture according to the invention.

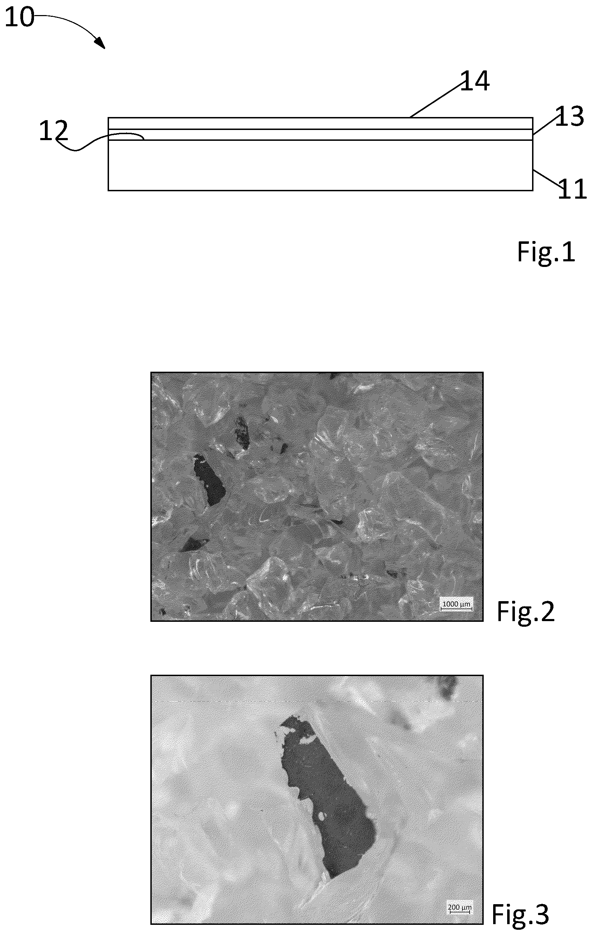

In particular, as shown by way of example in Fig. 1, the ceramic tile 10 comprises a ceramic substrate 11 produced using the ceramic mixture according to the invention.

Optionally, the ceramic tile 10 comprises a layer of engobe 13 deposited on the exposed surface 12 of the ceramic substrate 11 and on which a pattern is produced.

Optionally, the ceramic tile 10 comprises a covering of glaze 14 deposited on the exposed surface 12 and covering the pattern.

Optionally, the ceramic tile 10 can have a three-dimensional structure on the exposed surface 12 produced according to the different methods known to those skilled in the art (also combinable with one another).

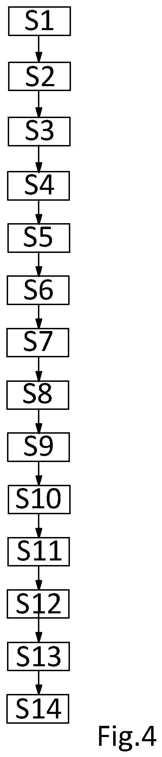

The protection provided by the present invention also extends to a method for producing a ceramic tile 10 produced using the ceramic mixture according to the invention, schematized in Fig. 4.

In particular, the method comprises the step S1 of providing at least one photovoltaic panel and the step S2 of recovering glass from the at least one photovoltaic panel.

In particular, the step S2 is carried out by grinding at least one photovoltaic panel and subsequent heat and/or chemical treatment of the electronic components.

Optionally, the photovoltaic panel is ground so that the glass has a particle size in a percentage of 100% less than or equal to 1 cm.

Subsequently, the method comprises the step S3 of sieving the glass.

In particular, sieving is both of mechanical and magnetic type to remove any metal and non-metal residues (such as filaments).

Hereunder, the method comprises the step S4 of adding the sieved glass to clays, sands and feldspars so as to obtain the ceramic mixture according to the invention.

Subsequently, the method comprises the step S5 of grinding and mixing the ceramic mixture according to the invention and water obtaining a liquid called "slurry".

The method then comprises the step S6 of atomizing the slurry to obtain a powder.

In particular, the powder thus obtained has a particle size distribution suitable for pressing.

Subsequently, the method comprises the step S7 of pressing the powder obtaining the ceramic substrate 11.

In particular, during pressing the powder is compacted and, at the same time, the format of the ceramic tile 10 is defined.

Following this, the method comprises the step S8 of drying the ceramic substrate 11 thus obtained and, subsequently, the method comprises the step S13 of firing the dried ceramic substrate 11 according to a controlled firing process.

Optionally, once dried and before being subjected to the controlled firing process, the ceramic substrate 11 can be transferred to a glazing line in which at least the exposed surface 12 of the ceramic substrate 11 is decorated.

In particular, the method can comprise the step S9 of covering the exposed surface 12 with the layer of engobe 13 so as to regulate the chromatic tone and prepare it for the step S10 of producing the pattern on the exposed surface 12.

The method can further comprise the step S11 of applying the covering of protective glaze 14 on the exposed surface 12, covering the pattern.

Optionally, the method can comprise the step S12 of producing a three-dimensional structure on the exposed surface 12 according to the different methods known to those skilled in the art (also combinable with one another).

Optionally, post-firing, the ceramic tile 10 can be subjected to a grinding step S14 during which the ceramic tile 10 is squared and calibrated.

Hereunder, three experimental tests conducted by the Applicant using glass obtained from the disposal process of photovoltaic panels are indicated and analyzed.

In detail, the results of the quantitative chemical analysis (in percentages) conducted on the glass used are indicated below.

| **SiO₂** | **Al₂O₃** | **Fe₂O₃** | **TiO₂** | **CaO** | **MgO** | **Na₂O** | **K₂O** | **ZrO₂** | **ZnO** | **PhO** | **BaO** | **SrO** | **B₂O₃** | **LiO₂** | **Fluorides** |
|---|---|---|---|---|---|---|---|---|---|---|---|---|---|---|---|
| 72.3 | 0.65 | 0.08 | 0.03 | 8.25 | 3.96 | 13.2 | 0.34 | 0.26 | <0.01 | <0.01 | 0.18 | 0.11 | 0.22 | <0.01 | <0.01 |

The table shows that the glass obtained from the disposal process of photovoltaic panels is mainly of sodium-calcium type, which generically comprises (in percentage of the total mass) SiO₂ (around 70%), Na₂O (around 15%) and CaO (around 9%).

In particular, the glass used has a particle size in a percentage of 100% less than or equal to 1 cm.

Moreover, the glass used has the typical dark residues (portions of photovoltaic cells) as shown in Figs. 2 and 3.

During the first test the feldspars contained in a first ceramic mixture (i.e., a mixture for producing ceramic tiles made of porcelain stoneware of the state of the art) were progressively replaced with the glass obtained from the disposal process of photovoltaic panels, as indicated in the table below (the values are indicated in percentage by weight on the dry total).

| | **Clays** | **Sands** | **Feldspars** | **Recycled glass** |
|---|---|---|---|---|
| **First ceramic mixture** | 50±5 | 36±4 | 14±1 | --- |
| **Mixture 1a** | 50±5 | 36±4 | 9±1 | 5±1 |
| **Mixture 1b** | 50±5 | 36±4 | 4±1 | 10±1 |

In particular, the particle size of the slurries obtained from the mixture 1a, from the mixture 1b and from the first ceramic mixture was measured and compared.

In fact, the particle size of the slurry is of considerable importance as it controls some properties of the finished tile, such as porosity and mechanical strength.

The measurement was performed using the laser diffraction technique, i.e., a technique for measuring the diffraction (due to the particles) of a laser beam, and the results are indicated in the table below.

| | **D10(µm)** | **D50(µm)** | **D90(µm)** |
|---|---|---|---|
| **First ceramic mixture** | 1.6±0.2 | 11±1 | 44±4 |
| **Mixture 1a** | 1.8±0.2 | 11±1 | 44±4 |
| **Mixture 1b** | 1.8±0.2 | 11±1 | 44±4 |

The results show that the slurries obtained from the three mixtures (first ceramic mixture, mixture 1a and mixture 1b) have a similar particle size and, consequently, both the mixture 1a and the mixture 1b allow a very strong and durable ceramic tile with mechanical properties comparable (if not identical) to a ceramic tile made of porcelain stoneware of the state of the art to be obtained.

The breaking load of the dried mixture 1a, of the dried mixture 1b and of the dried first ceramic mixture was also measured and compared.

In fact, the breaking load is a very important mechanical property, as a mechanically dried mixture with low strength would be unable to withstand the mechanical stresses to which it is subjected along the glazing line.

The results are indicated in the table below.

| | **Breaking load (Kg/cm²)** |
|---|---|
| **First ceramic mixture** | 33±3 |
| **Mixture 1a** | 32±3 |
| **Mixture 1b** | 32±3 |

The results show that the mechanical resistance of the three different mixtures (first ceramic mixture, mixture 1a and mixture 1b) is comparable and, for this reason, the mixture 1a and the mixture 1b are suitable for use to produce ceramic substrates for patterned tiles.

The colorimetric parameters and the percentage linear shrinkage of the mixture 1a, of the mixture 1b and of the first ceramic mixture were also measured and compared after firing in the kiln.

In particular, the colorimetric parameter and the linear shrinkage were compared at similar values of water absorption as indicated in the table below (the water absorption and linear shrinkage values are expressed in percentage).

| | **Absorption** | **Shrinkage** | **L*** | **a*** | **b*** | **Firing Tmax** |
|---|---|---|---|---|---|---|
| **First ceramic mixture** | 0.06±0.01 | 6.8±0.7 | 60±6 | 2.1±0.2 | 11±1 | (1220±10)°C |
| **Mixture 1a** | 0.04±0.01 | 6.7±0.7 | 59±6 | 2.7±0.3 | 12±1 | (1205±10)°C |
| **Mixture 1b** | 0.02±0.01 | 6.5±0.7 | 60±6 | 2.5±0.3 | 12±1 | (1205±10)°C |

Firstly, the results show that to obtain a similar water absorption value, the mixture 1a and the mixture 1b require a lower maximum firing temperature (firing Tmax) with respect to the first ceramic mixture.

In other words, by replacing a part of the feldspar with the glass obtained from the disposal process of photovoltaic panels, the maximum firing temperature can be lowered.

Moreover, the percentage linear shrinkage of the mixtures, at similar water absorption values, is comparable.

Finally, also the colorimetric parameters L*, a* and b* are similar.

In particular, L* is a parameter whose value ranges from 0 (black) to 100 (white), a* is instead a parameter whose value ranges from -100 (green) to 100 (red), while b* is a parameter whose value ranges from -100 (blue) to 100 (yellow).

In other words, the mixture 1a and the mixture 1b are slightly darker, slightly redder and slightly more yellow than the first ceramic mixture, but the chromatic difference is not sufficient to compromise its use as ceramic substrate for a patterned tile.

Instead, during the second test, the feldspars contained in the first ceramic mixture were progressively replaced with glass obtained from the disposal process of photovoltaic panels and an increased percentage of clay, as indicated in the table below (the values are indicated in percentage by weight of the dry total).

| | **Clays** | **Sands** | **Feldspars** | **Recycled glass** |
|---|---|---|---|---|
| **First ceramic mixture** | 50±5 | 36±4 | 14±1 | --- |
| **Mixture 1c** | 55±5 | 36±4 | 4±1 | 5±1 |

The particle size of the slurries obtained from the two mixtures was measured and compared. The results are indicated in the table below.

| | **D10(µm)** | **D50(µm)** | **D90(µm)** |
|---|---|---|---|
| **First ceramic mixture** | 1.6±0.2 | 11±1 | 44±4 |
| **Mixture 1c** | 1.7±0.2 | 11±1 | 44±4 |

The results show that the slurries obtained from the two mixtures (first ceramic mixture and mixture 1c) have a similar particle size and, consequently, the mixture 1c allows a very strong and durable ceramic tile to be obtained, with mechanical properties comparable, (if not identical) to a ceramic tile made of porcelain stoneware of the state of the art.

The breaking load of the mixture 1c and of the first ceramic mixture was also measured and compared. The results are indicated in the table below.

| | **Breaking load (Kg/cm²)** |
|---|---|
| **First ceramic mixture** | 32±3 |
| **Mixture 1c** | 34±3 |

The results show that the mechanical strength of the two different mixtures (first ceramic mixture and mixture 1c) is similar and, for this reason, the mixture 1c is suitable for use to produce ceramic substrates for patterned tiles.

The colorimetric parameters and the percentage linear shrinkage of the mixture 1c and of the first ceramic mixture were also measured after firing in the kiln.

In particular, the colorimetric parameters and the percentage linear shrinkage were compared at similar water absorption values as indicated in the table below (the water absorption and linear shrinkage values are expressed in percentage).

| | **Absorption** | **Shrinkage** | **L*** | **a*** | **b*** | **Firing Tmax** |
|---|---|---|---|---|---|---|
| **First ceramic mixture** | 0.04±0.01 | 6.7±0.2 | 61±6 | 2.0±0.2 | 10±1 | (1220±10)°C |
| **Mixture 1c** | 0.08±0.01 | 6.2±0.2 | 60±6 | 2.5±0.3 | 12±1 | (1205±10)°C |

Firstly, the results show that to obtain a similar water absorption value, the mixture 1c requires a lower maximum firing temperature (firing Tmax) with respect to the first ceramic mixture.

In other words, by replacing a part of feldspar with glass obtained from the disposal process of photovoltaic panels and an increased percentage of clay, the maximum firing temperature can be lowered.

Moreover, the percentage linear shrinkage of the mixtures, at a similar water absorption value, is comparable.

Finally, the colorimetric parameters L*, a* and b* are also similar.

In particular, the mixture 1c is slightly darker, slightly redder and slightly more yellow than the first ceramic mixture, but the chromatic difference is not sufficient to compromise its use as ceramic substrate for a patterned tile.

Finally, during the third test the feldspars contained in the first ceramic mixture were progressively replaced with glass obtained from the disposal process of photovoltaic panels and an increased percentage of sand, as indicated in the table below (the values are indicated in percentage by weight on dry total).

| | **Clays** | **Sands** | **Feldspars** | **Recycled glass** |
|---|---|---|---|---|
| **First ceramic mixture** | 50±5 | 36±4 | 14±1 | --- |
| **Mixture 1d** | 50±5 | 41±4 | 4±1 | 5±1 |

In this case, only the particle size of the slurries obtained from the two mixtures was measured and compared, without measuring the breaking load as, since there was no change in the percentage of clays with respect to the first test, the results would have been very similar (if not identical).

The results are indicated in the following table.

| | **D10(µm)** | **D50(µm)** | **D90(µm)** |
|---|---|---|---|
| **First ceramic mixture** | 1.6±0.2 | 11±1 | 44±4 |
| **Mixture 1d** | 1.7±0.2 | 11+1 | 44±4 |

The results show that the slurries obtained from the two mixtures (first ceramic mixture and mixture 1d) have a similar particle size and, consequently, the mixture 1d allows a very strong and durable ceramic tile to be obtained, with mechanical properties comparable, (if not identical) to a ceramic tile made of porcelain stoneware of the state of the art.

Finally, the colorimetric parameters and the percentage linear shrinkage of the mixture 1d and of the first ceramic mixture were also measured after firing in the kiln.

In particular, the colorimetric parameters and the percentage linear shrinkage were compared at similar water absorption values, as indicated in the table below (the water absorption and linear shrinkage values are expressed in percentage).

| | **Absorption** | **Shrinkage** | **L*** | **a*** | **b*** | **Firing Tmax** |
|---|---|---|---|---|---|---|
| **First ceramic mixture** | 0.04±0.01 | 6.4±0.6 | 60±6 | 2.1±0.2 | 10±1 | (1220±10)°C |
| **Mixture 1d** | 0.06±0.01 | 6.4±0.6 | 59±6 | 2.6±0.3 | 12±1 | (1205±10)°C |

Firstly, the results shows that to obtain a similar water absorption value, the mixture 1d requires a lower maximum firing temperature (firing Tmax) with respect to the first ceramic mixture.

In other words, by replacing a part of feldspar with the glass obtained from the disposal process of photovoltaic panels and an increased percentage of sand, the maximum firing temperature can be lowered.

Moreover, the percentage linear shrinkage of the mixtures, at a similar water absorption value, is comparable.

Finally, the colorimetric parameters L*, a* and b* are also similar.

In particular, the mixture 1d is slightly darker, slightly redder and slightly more yellow than the first ceramic mixture, but the chromatic difference is not sufficient to compromise its use as ceramic substrate for a patterned tile.

From the description above and from the experimental results indicated above, it can be seen that the ceramic mixture and the ceramic tile 10 according to the invention achieve all the intended objects, solving the problems of the prior art.

In fact, the ceramic mixture according to the invention allows the environmental impact of the ceramic industry to be reduced.

In particular, the ceramic mixture according to the invention comprises glass obtained from the disposal process of photovoltaic panels so as to reduce the percentage of feldspars, reducing the consumption (and transport) of non-renewable raw materials.

Moreover, the use of glass obtained from the disposal process of photovoltaic panels in place of a percentage of feldspars allows the maximum firing temperature of the ceramic mixture to be reduced, further reducing the environmental impact of the ceramic industry.

In addition, the method according to the invention allows a ceramic tile to be produced using the ceramic mixture according to the invention.

Moreover, the ceramic tile 10 produced using the ceramic mixture according to the invention has mechanical properties comparable (if not identical) to ceramic tiles made of porcelain stoneware of the state of the art.

In other words, the ceramic tile 10 is very strong and durable.

Moreover, the ceramic tile 10 is easy to clean and not easily soiled.

Additionally, as confirmed by the experimental tests, the residues of dark color that characterize glass obtained from the disposal process of photovoltaic panels, and which make their reuse particularly complex, do not prevent use of the glass in a ceramic mixture according to the invention.

Variations and/or additions to the above description and to the illustrations in the accompanying drawings are possible.

In particular, the present invention is in no way limited to the examples provided above.

## Claims

1. Ceramic mixture for tiles comprising glass obtained from the disposal process of photovoltaic panels in a percentage ranging from 2% to 30% by weight on the dry total.

2. Ceramic mixture according to claim 1 comprising said glass in a percentage equal to or less than 25% by weight on the dry total.

3. Ceramic mixture according to claim 1 or 2, wherein said glass comprises SiO2 in a percentage ranging from 75% to 65%, Na₂O in a percentage ranging from 20% to 10%, and CaO in a percentage ranging from 15% to 5%.

4. Ceramic mixture according to any of the preceding claims further comprising:
∘ clays in a percentage ranging from 25% to 70% by weight on the dry total;
∘ sands in a percentage ranging from 10% to 55% by weight on the dry total; and
∘ feldspars in a percentage ranging from 3% to 53% by weight on the dry total.

5. Ceramic mixture according to claim 4 comprising:
∘ clays in a percentage ranging from 25% to 55% by weight on the dry total;
∘ sands in a percentage ranging from 10% to 40% by weight on the dry total; and
∘ feldspars in a percentage ranging from 3% to 53% by weight on the dry total.

6. Ceramic mixture according to claim 4 comprising:
∘ clays in a percentage ranging from 25% to 70% by weight on the dry total;
∘ sands in a percentage ranging from 10% to 40% by weight on the dry total; and
∘ feldspars in a percentage ranging from 3% to 38% by weight on the dry total.

7. Ceramic mixture according to claim 4 comprising:
∘ clays in a percentage ranging from 25% to 55% by weight on the dry total;
∘ sands in a percentage ranging from 10% to 55% by weight on the dry total; and
∘ feldspars in a percentage ranging from 3% to 38% by weight on the dry total.

8. Use of glass obtained from the disposal process of photovoltaic panels for the production of a ceramic mixture according to any of the preceding claims.

9. Ceramic tile (10) comprising a ceramic substrate (11) made using a ceramic mixture according to any of the claims from 1 to 7.

10. Method for producing a ceramic tile (10) comprising:
• the step (S1) of providing at least one photovoltaic panel;
• the step (S2) of recovering glass from the at least one photovoltaic panel;
• the step (S3) of mechanically and magnetically sieving said glass to remove any metallic and non-metallic residues;
• the step (S4) of adding said sieved glass to clays, sands, and feldspars to obtain a mixture according to any of the claims from 1 to 7;
• the step (S5) of grinding and mixing said mixture with water to obtain a slurry;
• the step (S6) of atomizing said slurry to obtain a powder;
• the step (S7) of pressing said powder to obtain a ceramic substrate (11);
• the step (S8) of drying said ceramic substrate (11); and
• the step (S13) of firing said dried ceramic substrate (11) according to a controlled firing process.
